# EUROPEAN PATENT SPECIFICATION

(11) **EP 4 385 841 B1**
(45) Date of publication and mention of the grant of the patent: **03.09.2025**
(21) Application number: 22214250.7
(22) Date of filing: 16.12.2022
(51) Int. Cl.: B60T 13/74

(54) **ELECTRO-MECHANICAL ACTUATOR ASSEMBLY FOR ACTUATING A BRAKE ACTUATOR, BRAKE ASSEMBLY AND VEHICLE**
ELEKTROMECHANISCHE AKTUATORANORDNUNG ZUR BETÄTIGUNG EINES BREMSAKTUATORS, BREMSANORDNUNG UND FAHRZEUG
ENSEMBLE ACTIONNEUR ÉLECTROMÉCANIQUE POUR ACTIONNER UN ACTIONNEUR DE FREIN, ENSEMBLE FREIN ET VÉHICULE

(43) Date of publication of application: 19.06.2024
(73) Proprietor: KNORR-BREMSE Systeme für Nutzfahrzeuge GmbH, 80809 München (DE)
(72) Inventor: ADAMCZYK, Philipp, 82347 Bernried (DE); BLESSING, Michael, 80687 München (DE); GYÖRKE, Zsombor, 8360 Keszthely (HU); HEIGL, Korbinian, 85652 Pliening (DE); HÖS, Levente, 1047 Budapest (HU); HOLLOSI, Mate, 1097 Budapest (HU); KLINGNER, Matthias, 82275 Emmering (DE); KOKREHEL, Csaba, 1119 Budapest (HU); KRÜGER, Sven Philip, 81476 München (DE); MONORI, Gyula, 6065 Lakitelek (HU); NAKAMURA, Tatsuro, 1027 Budapest (HU); PESCHEL, Michael, 82296 Schöngeising (DE); TOTH, Janos, 6000 Kecskemét (HU); TOTH-KATONA, Tamas, 1039 Budapest (HU); SCHÖFBERGER, Tobias, 84048 Mainburg (DE); SZABO, Janos, 1101 Budapest (HU)

(56) References cited:
- EP-A1- 1 236 922
- DE-A1- 102018 003 752
- US-A1- 2016 377 138
- US-A1- 2019 368 561
- US-A1- 2021 197 784
- US-A1- 2022 266 808
- US-B2- 10 550 903

## Description

The present invention relates to an electro-mechanical actuator assembly for actuating a brake actuator, a brake assembly comprising such electro-mechanical actuator assembly, and a vehicle comprising such electro-mechanical actuator assembly or such brake assembly.

Pneumatic brake systems are widely utilized for commercial vehicle retardation. Floating caliper disc brakes are the most common foundation brake solutions within these systems for wheel end brake torque application. Pneumatic actuators are attached to these calipers via a simple flange and nuts. Thanks to this interface, these actuators can be exchanged on a modular way, supporting system setup for different brake performances based on the actuator power.

The electro-mechanical brake actuation principle is about to penetrate the commercial vehicle market. Since the vehicle suspension and axle compartment together with the brake components is already given, the electro-mechanical brake actuation is limited in the degrees of freedom in design.

Further, brake calipers or braking members in general may be actuated by a brake actuator such as a rotating lever, wherein a specific contact surface or interface to receive an actuation, e.g. by a pushrod as part of an actuation assembly, moves along a curved trajectory due to rotation of the rotating lever during a braking action. This may result in additional loads on the actuation mechanism.

In this context, US 2022/266808 A1 relates to a hydraulic and electromechanical service and parking disc brake which may have a service braking system, having at least one hydraulic actuator, a parking braking system having at least one electromechanical actuator transmission irreversibility, a control system connected to the service braking system and to the parking system and a user interface. A translational member of the electromechanical actuator is restrained to be rotationally integral with respect to the caliper via an anti-rotation shape coupling with a guide portion which is integral with the caliper and arranged on a rear side of the translational member, opposite to the free end.

It is an object of the present invention to allow the implementation of an electro-mechanical brake actuation in an efficient manner.

The object is solved by the subject matters of the independent claims. Further aspects of the present invention are subject to the dependent claims.

According to the present invention an electro-mechanical actuator assembly for actuating a brake actuator comprises an actuation mechanism configured to convert a rotational driving movement into a translational driven movement in a direction of a first longitudinal axis, and a pushing member operatively coupled to the actuation mechanism to receive and transfer the translational driven movement at least in the direction of the first longitudinal axis, wherein the actuation mechanism is a spindle-spindle nut mechanism, wherein a spindle nut of the actuation mechanism is rotationally supported about the first longitudinal axis while being axially fixed, and wherein a spindle of the actuation mechanism is configured to be axially moveable with respect to the first longitudinal axis while being rotationally fixed.

For example, the pushing member is axially driven by the actuation mechanism in the direction of the first longitudinal direction to move a brake actuator, such as a brake lever, in a braking direction. The brake actuator moved in the braking direction actuates a brake or braking member, such as a brake caliper, e.g. a floating caliper, to brake a brake disc. Since the spindle is not rotationally moveable but axially moveable by the rotation of the spindle nut to actuate the brake actuator via the pushing member, constructional and/or dynamic requirements with respect to the spindle may be reduced.

The term "operatively connected" or "operatively coupled" refers to a direct or indirect connection or coupling. For example, an indirect connection or coupling may comprise at least one intermediate component, e.g. to bridge distances and/or to provide flexible interfaces, arranged between the members to be operatively connected or coupled.

Accordingly, any described coupling of the pushing member to the spindle is also transferable to a coupling of the pushing member to at least one intermediate component, which is in turn operatively coupled to the spindle. For example, with respect to the pushing member being operatively connected to the spindle, the pushing member may be directly coupled to the spindle by a fixing member, such as a fixing O-ring, or indirectly coupled to the spindle by being coupled to the at least one intermediate component by such fixing member.

Further, the spindle nut is operatively connected to a driving device, preferably an electric motor, to be driven by the driving device directly or via at least one gear stage arranged between the driving device and the spindle nut.

Accordingly, the driving device, specifically a rotary driving device, drives the spindle nut to rotate to axially drive the spindle. The driving device may be directly or indirectly connected to the spindle nut. In this context but also in general, as previously stated, the term "operatively connected" or "operatively coupled" refers to a direct or indirect connection or coupling. For example, an indirect connection or coupling may comprise at least one intermediate component, e.g. to convert a movement and/or to bridge distances, arranged between the members to be operatively connected or coupled. With respect to the spindle nut being operatively connected to the driving device, at least one gear stage may be arranged between the driving device and the spindle nut. The at least one gear stage may allow to convert a rotational speed of the driving device into a different rotational speed of the spindle nut. Preferably, the at least one gear stage is configured to lower the rotational speed of the spindle nut with respect to the rotational speed of the driving device. With the driving device being or at least comprising an electric motor, driving of the spindle can be implemented in an easy manner.

Further, the driving device comprises a driving device shaft extending in a direction of a second longitudinal axis, in parallel to the first longitudinal axis, wherein the driving device shaft preferably at least partially overlaps the spindle in the direction of the second longitudinal axis.

The second longitudinal axis may be coaxially aligned with the first longitudinal axis, for example in series with the spindle or spindle nut, respectively. However, due to spatial constraints for installation or to reduce the size of the electro-mechanical actuator assembly in the direction of the first longitudinal axis, the driving device shaft and therefore the second longitudinal axis may be arranged to extend in parallel to the first longitudinal axis. In such configuration the driving device shaft and the spindle nut may be operatively coupled via the at least one gear stage, wherein the at least one gear stage may only be provided to transfer the rotational movement of the driving device shaft to the spindle nut with the same rotational speed but may alternatively convert the rotational speed.

By the driving device shaft and the spindle at least partially overlapping, the installation space can be reduced in the direction of the first longitudinal axis resulting in a compact design in such direction. For example, the first longitudinal axis and the second longitudinal axis are arranged in parallel to each other. Further, the driving device shaft and the spindle are arranged such that the shorter one of the driving device shaft or the spindle in at least one relative position is not extending beyond the longer one of the driving device shaft or the spindle with respect to the first longitudinal axis or the second longitudinal axis, respectively. For the driving device shaft and the spindle being substantially equal in length with respect to the respective first and second longitudinal axis, preferably none of the driving device shaft and the spindle is extending beyond the other one in a predetermined relative position. The first longitudinal axis and the second longitudinal axis may be arranged to extend in a horizontal plane or a vertical plane upon being installed.

In some embodiments, the spindle-spindle nut mechanism is a ball screw.

For example, the spindle-spindle nut mechanism is a recirculating ball-spindle based actuator, wherein the spindle is extending in the direction of the first longitudinal axis, preferably coaxially therewith, and may be supported by the spindle nut during an axial movement of the spindle along the first longitudinal axis or an axis in parallel to the first longitudinal axis but keeping the spindle rotationally stationary with respect to the direction of the first longitudinal axis. The spindle starts moving axially with respect to the first longitudinal axis by the rotational movement of the spindle nut. To prevent the spindle from rotating together with the spindle nut and being rotationally stationary, the spindle may comprise at least one spindle support pin projecting radially with respect to the first longitudinal axis. The at least one pin may be received in a guiding groove of a housing, in which the spindle is received, or of another stationary component. The guiding groove extends in the direction of the axial movement of the spindle. By the axial movement of the spindle, the pushing is also moved in the axial direction. However, in other embodiments, the spindle-spindle nut mechanism may be another actuation mechanism configured to convert a rotational driving movement into a translational driven movement in a direction of a first longitudinal axis, such as a threaded mechanism.

Preferably, the electro-mechanical actuator assembly further comprises an electro-mechanical linear actuator configured and controlled to lock the spindle nut against a rotational movement.

For example, the electro-mechanical linear actuator may be configured to be moved against the spindle nut to lock or brake the spindle nut against a rotational movement by providing a form fit connection. However, in other embodiments, such locking may be alternatively or in addition provided by another locking mechanism . Optionally, the electro-mechanical linear actuator may be directly placed at the back of the spindle nut to directly act thereon. By locking the spindle nut against a rotational movement, a force acting on the spindle in the axial direction with respect to the first longitudinal axis does not cause the spindle or the spindle nut to move.

In some embodiments, the electro-mechanical actuator assembly further comprises a locking unit, preferably an electro-mechanical linear actuator or a locking clutch, more preferably a bi-stable brake, configured and controlled to lock the driving device shaft against a rotational movement.

By locking the driving device shaft, any unintentional movement of the spindle nut may be prevented. In turn, any rotational movement of the spindle nut does not cause the driving device shaft operatively connected to the spindle nut to rotate, which may affect the driving device. The locking unit is preferably configured to lock by a form fit connection.

Specifically, the locking unit is configured as a parking brake, specifically a parking brake clutch, coupled to the driving device shaft to lock the driving device rotation in a predetermined position. Preferably, the brake is pretensioned in the predetermined position, so that a parking brake function is realized.

Alternatively or in addition, the electro-mechanical linear actuator configured and controlled to lock the spindle nut against a rotational movement as previously described may also be used to provide the above parking brake function. In other words, the parking brake function may be implemented by the locking unit acting on the driving device shaft and/or by the electro-mechanical linear actuator acting on the spindle nut.

In some embodiments, the driving device shaft and the spindle extend substantially in one plane, and wherein the electro-mechanical actuator assembly further comprises at least one control device, preferably at least one electronic control device, arranged laterally to the plane and operatively connected to the driving device and/or the locking unit as previously described.

Accordingly, the control device is placed sidewise on the electro-mechanical actuator assembly. This allows the installation space to be further reduced in the direction of the first longitudinal axis.

In some embodiments, the electro-mechanical actuator assembly comprises at least two control devices arranged on opposite sides of the plane.

For example, the control devices may thereby form a control unit split in two parts. The control devices may be arranged that the electro-mechanical actuator assembly remains quasi-symmetric. Preferably the symmetry plane of the arrangement of the control devices corresponds to a brake caliper symmetry plane. The brake caliper symmetry plane is a symmetry plane substantially perpendicular to a plane in which the braking surfaces of the brake caliper extend or a braking plane, respectively.

Preferably, at least one of the at least two control devices is a control unit configured to control operatively connected components, and the other at least one of the at least two control devices is a power control unit configured to control a power supply to operatively connected components.

Accordingly, in the event of any failure of one of the at least two control devices, a redundancy to provide respective back-up functionalities may be easier implemented by separating types of functionalities to be assigned to one of the control devices or the other.

In some embodiments, the spindle nut is rotationally supported about the first longitudinal axis by at least one bearing arranged at a radial outer surface of the spindle nut.

Due to a braking operation with the pushing member being in engagement with the brake actuator, a force is applied on the pushing member and therefore other subsequent components operatively connected thereto. In particular, since the pushing member may be tilted or at least affected by forces in engagement with the brake actuator by the brake actuator being particularly moved on a curved trajectory, respective forces or force components, respectively, may act on the pushing member and, for example, the spindle and subsequently the spindle nut. Accordingly, the at least one bearing arranged at a radial outer surface, i.e. extending at least partially around an outer radial circumference, of the spindle nut may absorb such forces while guiding the axial movement of the guiding device. The at least one bearing may therefore be supported radially inside a housing at least partially accommodating the spindle nut. Due to the force absorption by the at least one bearing, respective forces may not have sufficient influence to cause deformations or other damages.

For example, the spindle nut is rotationally supported about the first longitudinal axis by at least one spindle nut fixed bearing and at least one spindle nut loose bearing arranged at a radial outer surface of the spindle. Both bearings may be deep-grooved ball bearings, which are also capable of carrying axial forces. Preferably, the spindle nut fixing bearing is configured to carry the axial force transmitted from the pushing member. The at least one bearing, for example, the spindle nut fixing bearing, may also be a combination of more than one bearing, such as an axial thrust ball bearing and one further radial bearing of any kind. In other words, the at least one bearing is configured to take up the axial forces by being provided as a single bearing or a combination of bearings, which provide axial and radial force support.

In some embodiments, in the direction of the first longitudinal axis, an end portion of the spindle comprises a spindle recess, preferably in a conical shape tapered from the opening of the spindle recess to the closed end of the spindle recess, configured to at least partially receive the pushing member, wherein the pushing member is preferably operatively connected to the spindle within the spindle recess.

Accordingly, the pushing member at least partially extends into the spindle to allow a more compact design in the direction of the first longitudinal axis. Due to the conical shape of the spindle recess, the spindle recess may provide a centering capability for the pushing member and/or may provide a predetermined tilting capability for the pushing member within the spindle, as described later.

In some embodiments, the spindle is supported by the spindle nut and/or at least one bearing member over a predetermined support section in the direction of the first longitudinal axis, preferably a predetermined support section at least partially corresponding to a predetermined actuation movement of the spindle for actuating a brake actuator, and wherein the spindle recess extends in the direction of the first longitudinal axis such that a bending force transmission from the pushing member to the spindle substantially occurs within the predetermined support section.

During a braking operation, the pushing member may transfer bending forces or a bending torque, respectively, on the spindle. By supporting the spindle by the spindle nut and/or at least one bearing member over the predetermined support section, a respective effect on the spindle may be reduced. In particular, the predetermined support section at least partially corresponding to a predetermined actuation movement of the spindle for actuating a brake actuator allows to support the spindle at least partially over normal brake operating procedures. The predetermined support section may specifically correspond to a predetermined actuation movement with expectable bending forces equal to or above a predetermined threshold.

In accordance with the above, the spindle recess extends in the direction of the first longitudinal axis such that a bending force transmission from the pushing member to the spindle substantially occurs within the predetermined support section, in which the spindle is sufficiently supported.

Further, with the pushing member further extending in the spindle, the deflection angle of the pushing member with respect to the first longitudinal axis for the same actuation of the brake actuator and therefore the bending forces are allowed to be decreased. In other words, the more the pushing member extends into the spindle, the less the deflection angle. For example, the pushing member may extend within the spindle recess at least beyond the pivot axis of the brake actuator in the direction away from the brake actuator in the direction of the first longitudinal axis. Alternatively or in addition, the length of the pushing member within the spindle recess is determined such that the pivot axis of the pushing member is located within the predetermined support section, for example, between two bearings axially arranged along the spindle nut, at least at a maximum stroke force or maximum actuator force, respectively, or at a respective force range exceeding a predetermined threshold acting from the pushing member on the spindle.

In some embodiments, the pushing member comprises a pushing member pivot portion configured to allow a tilting movement of the pushing member about a pivot axis inclined to the first longitudinal axis, wherein the pushing member comprises a pushing member body with one end comprising the pushing member pivot portion and an opposed end comprising a pushing member head, preferably an exchangeable and/or at least partially spherical pushing member head, configured to engage with a brake actuator for a respective actuation of the brake actuator.

For example, the pushing member may be a push rod, axially driven by the actuation mechanism in the direction of the first longitudinal direction to move a brake actuator, such as a brake lever, in a braking direction. The brake actuator moved in the braking direction actuates a brake or braking member, such as a brake caliper, e.g. a floating caliper, to brake a brake disc. A brake lever as the brake actuator may thereby be rotated about a pivot axis extending in a direction inclined, particularly substantially perpendicular, to the first longitudinal axis, but not intersecting the first longitudinal axis and thereby distanced therefrom. The brake actuator and the pushing member may each comprise an engaging interface configured to engage with each other such that the pushing member is engaged with the brake actuator during a braking movement. Since the brake actuator rotates about the pivot axis, the interface of the brake actuator moves along a curved trajectory. Accordingly, the pushing member in engagement with the brake actuator comprises a pushing member pivot portion to allow a tilting movement of the pushing member about a respective pivot axis inclined, particularly substantially perpendicular, to the first longitudinal axis. The pivot axis of the pushing member is preferably substantially in parallel to the pivot axis of the brake actuator. Here and in general, the term "substantially" generally relates to tolerances in manufacturing and/or assembling as well as any other slight deviations that do not interfere with basic principles provided by respective configurations.

Due to the actuation mechanism configured to convert a rotational driving movement into a translational driven movement in the direction of the first longitudinal axis, and the transfer mechanism operatively coupled to the actuation mechanism to receive and transfer the translational driven movement at least in the direction of the first longitudinal axis, the actuation mechanism is capable of being retrofitted in a brake assembly when exchanging a linear drive with a rotary drive within a given brake actuator and/or brake configuration. Further the ability of the pushing member to provide a tilting movement allows to further reduce loads on the pushing member, which may otherwise result in deformations or other damages of the pushing member or components subsequent thereof in a direction away from the brake actuator, and/or on the brake actuator.

In accordance with the pushing member comprising a pushing member body with one end comprising the pushing member pivot portion and an opposed end comprising a pushing member head configured to engage with a brake actuator for a respective actuation of the brake actuator, the pushing member extends along a pushing member longitudinal axis from the one end comprising the pushing member pivot portion to the other end comprising the pushing member head. For example, the pushing member longitudinal axis may be coaxially with the first longitudinal axis, and the pushing member body extends at least partially within the spindle recess.

Further, the pushing member head may be at least partially of a spherical shape, e.g. a positive hemisphere configured to be received by a corresponding negative hemisphere portion of the brake actuator to receive the pushing member head for engagement. Due to the spherical interface the contact surfaces of the positive hemispherical pushing member head and the negative hemispherical portion of the brake actuator may slide on each other during the movement along the curved trajectory without blocking such movement. However, the pushing member head is not restricted to a hemispherical shape and may provide another shape in accordance with the receiving portion of the brake actuator for an engagement with the pushing member head.

It may also be advantageous to allow the pushing member head to be exchanged to adapt the pushing member head with respect to different shapes and/or dimensions.

In some embodiments, the pushing member pivot portion comprises at least one pushing member pivot configured as a cylinder portion and/or a spherical portion.

For example, the pushing member pivot formed as a cylinder portion may be received in a corresponding cylinder support of the spindle allowing the pushing member to rotate about the cylinder axis. The cylinder portion may be formed by a cylinder or at least a section of a cylinder sufficient to allow a predetermined tilting movement of the pushing member. The at least one cylinder portion may extend in the radial direction outward from the pushing member pivot portion with respect to the pushing member longitudinal axis. Preferably, the pushing member pivot portion comprises at least two pushing member pivots as cylinder portions evenly distributed along the radial surface of the pushing member pivot portion with respect to the pushing member longitudinal axis. Due to the at least two pushing member pivots as cylinder portions, the pushing member may be more stably supported.

Alternatively or in addition, the pushing member pivot may comprise a spherical portion forming a ball joint or at least a ball joint section, e.g. to be slideable supported within the closed end portion of the spindle recess. Accordingly, the spherical portion may only be partially spherical. Due to the ball joint or ball joint section, respectively, the degrees of freedom for a tilting movement may be increased. In particular, the pushing member may thereby be rotatable in any direction as long as not interfering with other components. The spherical portion may be formed with the pushing member longitudinal axis as symmetry axis.

According to another aspect, the present invention relates to a brake assembly, comprising at least one electro-mechanical actuator assembly as previously described, and at least one brake actuator configured to actuate or release a brake upon being actuated by the electro-mechanical actuator assembly.

As previously described, the at least one brake actuator may be a brake lever to pivot about a pivot inclined, preferably substantially perpendicular, to the first longitudinal axis.

In some embodiments, the brake assembly further comprises a brake caliper actuatable by the at least one brake actuator, wherein the at least one brake caliper provides a braking plane extending in a direction substantially perpendicular to a braking movement, and wherein the at least one electro-mechanical actuator assembly is arranged with the first longitudinal axis substantially perpendicular to the braking plane, preferably in the brake caliper symmetry plane, with the at least one brake actuator disposed between the at least one electro-mechanical actuator assembly and the brake caliper or inside the brake caliper. The braking plane corresponds to the plane in which the braking surfaces of the brake caliper extend.

Any feature described with respect to the electro-mechanical actuator assembly is also applicable to the brake assembly. In turn, any feature described for the brake assembly is also applicable to the electro-mechanical actuator assembly.

According to another aspect, the present invention relates to a vehicle comprising at least one electro-mechanical actuator assembly as previously described and/or a brake assembly as previously described, wherein the vehicle is a commercial vehicle and/or an electrically powered or hybrid vehicle.

For example, the commercial vehicle may be a truck, a trailer, a bus and/or a combination of a towing vehicle and a trailer. Commercial vehicles and electrically powered or hybrid vehicles provide severe installation space constraints, which benefit from the previously described electro-mechanical actuator assembly and/or brake assembly.

Further advantages, aspects and details of the invention are subject to the claims, the following description of exemplary embodiments applying the principles of the invention, and the respective exemplary drawings.
**Figure 1** is a schematic cross-sectional lateral view of a brake assembly and an electro-mechanical actuator assembly according to an exemplary embodiment of the present invention;
**Figure 2** is a schematic rear view of a brake assembly according to the exemplary embodiment of the present invention;
**Figure 3** is a schematic cross-sectional lateral view of a pushing member according to a first modified exemplary embodiment of the present invention; and
**Figure 4** is a schematic cross-sectional lateral view of a pushing member according to a second modified exemplary embodiment of the present invention.

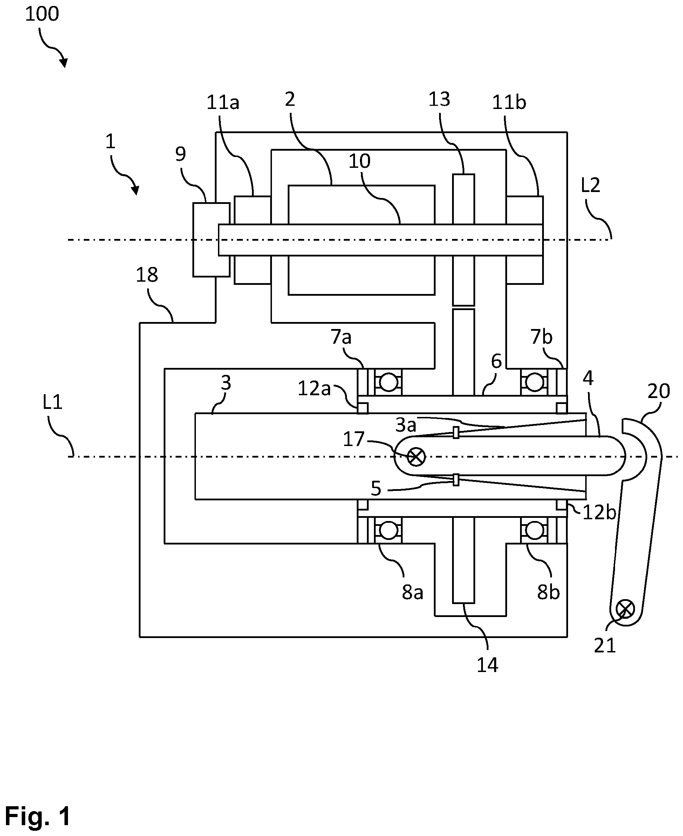

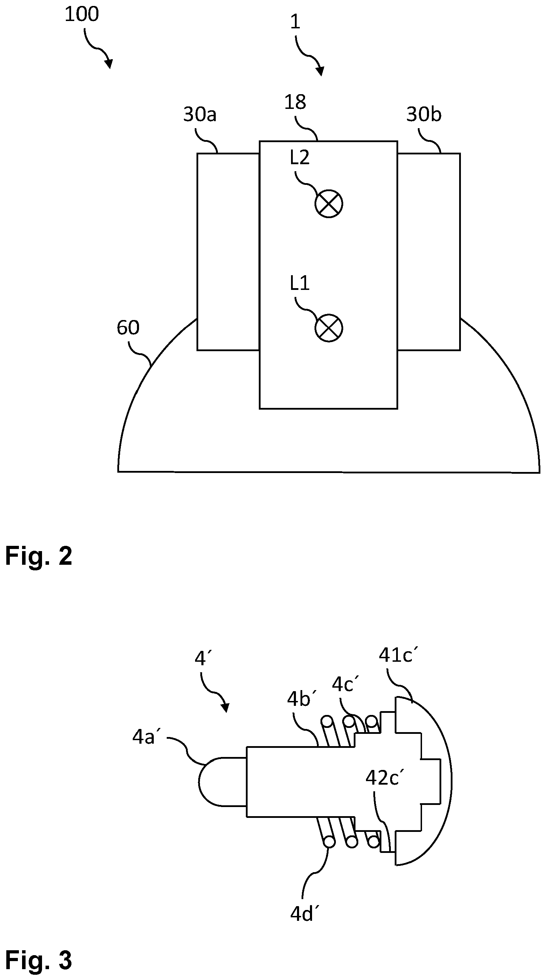

**Figure 1** shows a schematic cross-sectional lateral view of a brake assembly 100 and an electro-mechanical actuator assembly 1 according to an exemplary embodiment of the present invention. In Fig. 1, only the electro-mechanical actuator assembly 1 and a brake lever 20 as exemplary brake actuator are shown to be comprised by the brake assembly 100. However, other components may also be comprised by the brake assembly, as, for example, a brake caliper 60 (Fig. 2).

The electro-mechanical actuator assembly 1 comprises a spindle 3 and a spindle nut 6 configured as a recirculating ball spindle mechanism as an exemplary embodiment of an actuation mechanism configured to convert a rotational driving movement into a translational driven movement in a direction of a first longitudinal axis L1. The first longitudinal axis L1 corresponds to the longitudinal axis of the spindle 3. The spindle nut 6 is driven by an electric motor 2 as driving device comprising a motor shaft 10 as driving device shaft. The motor shaft 10 extends in a direction along a second longitudinal axis L2. The first longitudinal axis L1 is parallel to the second longitudinal axis L2. Further, the motor shaft 10 and the spindle 3 respectively arranged in parallel to each other are positioned such that the shorter motor driving shaft 10 does not extend with one end beyond the spindle 3 in at least one relative position to achieve a compact design in the direction of the first longitudinal axis L1 or the second longitudinal axis L2, respectively. In principle, for a compact design, the motor shaft 10 and the spindle 3 are preferably arranged to require minimum space in the direction of the first longitudinal axis L1 or the second longitudinal axis L2, respectively. To drive the spindle nut 6 by the electric motor 2, the motor shaft 10 comprises a drive gear 13 extending radially with respect to the second longitudinal axis L2, and the spindle nut 6 comprises a driven gear 14 extending radially with respect to the first longitudinal axis L1. The drive gear 13 and the driven gear 14 are positioned along the motor shaft 10 and the spindle nut 6, respectively, such that they are in engagement with each other to form a gear stage. In the exemplary embodiment, the gear stage is configured to convert the rotational speed of the motor shaft 10 in a lower rotational speed of the spindle nut 6.

The electric motor 2 and the motor shaft 10 are accommodated in a housing 18. The motor shaft 10 is rotationally supported in the housing 18 by motor shaft bearing 11a, 11b, each of which is disposed on one end of the motor shaft 10. Further, the motor shaft 10 can be locked against a rotational movement by a bi-stable brake 9 as locking unit.

The spindle nut 6 is also accommodated in the housing 18, and rotationally supported by a spindle nut fixing bearing 8a and a spindle nut loose bearing 8b. The spindle nut fixing bearing 8a is configured to allow the spindle nut 6 to rotate but prevent the spindle nut 6 from an axial movement with respect to the first longitudinal axis L1. In the exemplary embodiment, the spindle nut loose bearing 8b provides a further support to rotate the spindle nut 6 in a stable position.

Further, two radial seals 7a, 7b are arranged circumferentially around the spindle 6. The radial seals 7a, 7b are arranged at opposed ends of the spindle nut 6 in the direction of the first longitudinal axis L1 with the spindle nut fixing bearing 8a, the spindle nut loose bearing 8b, the driven gear 14, the drive gear 13, the motor shaft 10 and the electric motor 2 being sealed in a space of the housing therebetween.

The spindle 3 is configured to be axially moved by the spindle nut 6 with respect to the first longitudinal axis L1. To prevent the spindle 3 from a rotational movement, the spindle nut comprises support pins (not shown) extending radially outward in opposing directions from the spindle 3 with respect to the first longitudinal axis L1. The support pins extend into respective guiding grooves (not shown) to guide the support pins and thereby the spindle 3 during an axial movement in the axial movement direction, while preventing the spindle 3 to rotate. Two wipers 12a, 12b are arranged at opposed ends of the spindle nut 3 in the direction of the first longitudinal axis L1. Each of the two wipers 12a, 12b extends circumferentially between an inner diameter of the spindle nut 6 and an outer diameter of the spindle 3.

The spindle 3 comprises a spindle recess 3a in a conical shape. However, in other embodiments, the spindle recess 3a may be of a different shape, e.g. in a shape of a triangular slit, or a rectangular volume. In the exemplary embodiment, the conical shape of the spindle recess 3a provides an opening at the end of the spindle 3 facing toward the brake lever 20, while the spindle recess 3a is tapered toward the closed end portion facing away from the brake lever 20 in the direction of the first longitudinal axis L1. A pushing member 4 is partially received within the spindle recess 3a, and affixed thereto by a fixing member 5, here, a fixing O-ring. The pushing member 4 substantially extends in the direction of the first longitudinal axis L1 and is tiltable about a pivot axis 17, which extends substantially perpendicular to the first longitudinal axis L1 and in parallel to a pivot axis 21 of the brake lever 20. The pushing member 4 provides a spherically shaped end portion at the end facing away from the brake lever 20. The spherically shaped end portion corresponds to the contour of the closed end portion of the spindle recess 3a. Accordingly, the pushing member 4 is affixed to spindle 3 within the spindle recess 3a by the fixing member 5, such that the pushing member 4 is allowed to tilt about the pivot axis 17, wherein the spherically shaped end portion of the pushing member 4 slides along the corresponding contour of the closed end portion of the spindle recess 3a in a guided manner. The tilting movement of the pushing member 4 or the deflection from the first longitudinal axis L1 is restricted by the conical shaped circumferential wall of the spindle recess 3a extending from the closed end portion to the opening of the spindle recess 3a.

For a braking operation, the electric motor 2 drives the spindle nut 6 via the motor shaft 10 and the gear stage 13, 14 to rotate. Accordingly, the spindle 3 is translationally moved in the direction of the first longitudinal axis L1 toward the brake lever 20. Accordingly, the pushing member 4 operatively coupled to the spindle 3 is moved toward the brake lever 20. The end of the pushing member 4 facing the brake lever 20 engages with the brake lever 20, which is thereby rotated about the pivot axis 21 upon further movement of the pushing member 4 in the direction of the first longitudinal axis L1. The end of the pushing member 4 for engagement with the brake lever 20 provides a spherically shaped portion corresponding to a spherically shaped concave portion of the brake lever 20. Due to the brake lever 20 pivoting about the pivot axis 21 in response of being driven by the pushing member 4, the spherically shaped concave portion of the brake lever 20 follows a curved trajectory. Since the pushing member 4 is tiltable about the pivot axis 17, the pushing member is allowed to follow the curved trajectory of the braking lever 20.

To reduce bending forces on the spindle 3, which may occur during a braking operation due to the engagement of the pushing member 4 with the brake lever 20 and respective reaction forces, the pushing member 4 and the pivot axis 17 of the pushing member 4, respectively, extends deeply into the spindle 3 in accordance with a respective length of the spindle recess 3a in the direction of the first longitudinal axis L1. Further, to provide sufficient support of the spindle 3 with respect to occurring bending forces, the closed end portion of the spindle recess 3a and the pivot axis 17 of the pushing member 4, respectively, are located, such there are moved between the spindle nut fixed bearing 8a and the spindle nut loose bearing 8b during a braking operation.

**Figure 2** shows a schematic rear view of the brake assembly 100 according to the exemplary embodiment of the present invention. Besides the electro-mechanical actuator assembly 1 and the brake lever 20, which is not visible in the given perspective, already previously described, the brake assembly 100 further comprises a brake caliper 60. In the exemplary embodiment, the brake caliper 60 is a floating caliper configured to be actuated by the brake lever 20 arranged between the electro-mechanical actuator assembly 1 and the brake caliper 60. The braking surfaces of the brake caliper 60 extend in a plane substantially perpendicular to the first longitudinal axis L1. Further, in the exemplary embodiment, the electro-mechanical actuator assembly 1 comprises two electronic control units 30a, 30b as control devices. The electronic control units 30a, 30b are attached to the housing 18 on opposed lateral sides of the housing 18. The lateral sides of the housing extend in planes laterally to a plane comprising the first longitudinal axis L1 and the second longitudinal axis L2. One electronic control unit 30a is a control unit configured to control operatively connected components of the electro-mechanical actuator assembly 1, and the other electronic control unit 30b is a power control unit configured to control a power supply to operatively connected components of the electro-mechanical actuator assembly 1.

**Figure 3** shows a schematic cross-sectional lateral view of a pushing member 4' according to a first modified exemplary embodiment of the present invention. The pushing member 4' shows a configuration that also applies to the pushing member 4 in that the pushing member 4' comprises a pushing member body 4b' extending in a longitudinal direction from a pushing member head 4a' to an opposed pushing member pivot portion 4c'. In an assembled state of the electro-mechanical actuator assembly 1, the longitudinal axis of the pushing member body 4b' can be brought coaxially with the first longitudinal axis L1. The pushing member head 4a' provides a shape and thereby outer contour which corresponds to the receiving portion of the brake lever 20, here, a spherical shape, specifically a hemispherical shape. Since the contour of the receiving portion of the brake lever 20 may change in shape and/or contour in a different brake assembly and/or for other reasons for exchanging the pushing member head 4a', the pushing member head 4a' according to the present embodiment is releasable attachable to the pushing member body 4b'. However, in other embodiments, the pushing member head 4a' may be integrally formed with the pushing member body 4b'. For a releasable attachment, the pushing member head 4a' is screwed on the pushing member main body 4b'. In other embodiments, the pushing member head 4a' may be clamped on the pushing member body 4b' or may be releasable attached by any other form fit and/or force fit connection.

In the first modified exemplary embodiment, the pushing member 4' differs from the pushing member 4 in the pushing member pivot portion 4c' and a spring member 4d' provided to hold the pushing member 4' in the spindle recess 3a.

Similar to the pushing member 4, the pushing member pivot portion 4c' comprises a pushing member pivot 41c', which is formed as a spherical portion forming a ball joint or at least a ball joint section. The spherical portion is formed with the pushing member longitudinal axis as symmetry axis. Here, the pushing member pivot 41c' is releasable attachable to the pushing member pivot portion 4c'. Further, according to the modified exemplary embodiment, the pushing member pivot portion 4c' further comprises a pushing member abutment 42c' formed as a radially outwardly projecting rim with respect to the longitudinal axis of the pushing member 4'. The spring member 4d' of the pushing member 4' is configured to be arranged between the pushing member abutment 42c' and another opposed support, for example, a radially inwardly extending rim or at least one rim section of the spindle recess 3a, in which the pushing member 4' is at least partially to be received. Accordingly, the pushing member pivot 41c' is biased in the longitudinal direction of the pushing member 4' to be in contact with a supporting surface, here the closed end portion, of the spindle recess 3a for a tilting movement along the supporting surface.

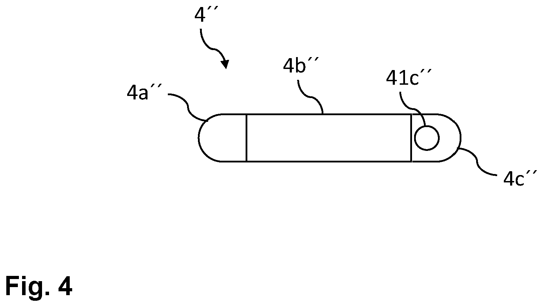

**Figure 4** shows a schematic cross-sectional lateral view of a pushing member 4" according to a second modified exemplary embodiment of the present invention. The pushing member 4" according to the second modified exemplary embodiment differs from the pushing member 4 and the pushing member 4' according to the first modified exemplary embodiment in the pushing member pivot portion 4c".

The pushing member pivot portion 4c" of the pushing member 4" according to the second modified exemplary embodiment comprises two pushing member pivots 41c" to form pivots to allow the pushing member 4" to tilt about the pivot axis 17. In the second modified exemplary embodiment, the pushing member pivots 41c" are formed as a cylindrical pins. However, in other embodiments, pushing member pivots 41c" may be formed as cylindrical sections, specifically cylindrical arc sections. As per the lateral view only one of the pushing member pivots 41c" is visible in Figure 4. However, the other pushing member pivot 41c" is opposed to the visible pushing member pivot 41c". To tiltably support the pushing member pivots 41c" in the spindle recess 3a, the spindle recess or a respectively inserted component provides corresponding pushing member pivot receiving portions.

The invention has been described with respect to an exemplary embodiments. However, the invention is not limited to the exemplary embodiments.

### LIST OF REFERENCE SIGNS

- 1: electro-mechanical actuator assembly
- 2: electric motor (driving device)
- 3: spindle
- 3a: spindle recess
- 4, 4', 4": pushing member
- 4a', 4a": pushing member head
- 4b', 4b": pushing member body
- 4c', 4c": pushing member pivot portion
- 4d': spring member
- 5: fixing member
- 6: spindle nut
- 7a, 7b: radial seal
- 8a: spindle nut fixing bearing
- 8b: spindle nut loose bearing
- 9: bi-stable brake (locking unit)
- 10: motor shaft (driving device shaft)
- 11a, 11b: motor shaft bearing
- 12a, 12b: wiper
- 13: drive gear
- 14: driven gear
- 15: spindle support bearing
- 17: pivot axis
- 18: housing
- 20: brake lever (brake actuator)
- 21: pivot axis
- 30a, 30b: electronic control unit (control device)
- 41c', 41c": pushing member pivot
- 60: brake caliper
- 100: brake assembly
- L1: first longitudinal axis
- L2: second longitudinal axis

## Claims

1. Electro-mechanical actuator assembly (1) for actuating a brake actuator (20), comprising:
an actuation mechanism (3, 6) configured to convert a rotational driving movement into a translational driven movement in a direction of a first longitudinal axis (L1), and
a pushing member (4, 4', 4") operatively coupled to the actuation mechanism (3, 6) to receive and transfer the translational driven movement at least in the direction of the first longitudinal axis (L1),
wherein the actuation mechanism (3, 6) is a spindle-spindle nut mechanism, wherein a spindle nut (6) of the actuation mechanism (3, 6) is rotationally supported about the first longitudinal axis (L1) while being axially fixed, and wherein a spindle (3) of the actuation mechanism (3, 6) is configured to be axially moveable with respect to the first longitudinal axis (L1) while being rotationally fixed, wherein
the spindle nut (6) is operatively connected to a driving device (2) to be driven by the driving device (2) directly or via at least one gear stage (13, 14) arranged between the driving device (2) and the spindle nut (6), **characterized in that**
the driving device (2) comprises a driving device shaft (10) extending in a direction of a second longitudinal axis (L2) in parallel to the first longitudinal axis (L1).

2. Electro-mechanical actuator assembly (1) according to claim 1, wherein the spindle-spindle nut mechanism (3, 6) is a ball screw.

3. Electro-mechanical actuator assembly (1) according to claim 1 or 2, wherein the driving device (2) is an electric motor.

4. Electro-mechanical actuator assembly (1) according to any one of the preceding claims, wherein the driving device shaft (10) at least partially overlaps the spindle (3) in the direction of the second longitudinal axis (L2).

5. Electro-mechanical actuator assembly (1) according to any one of the preceding claims, wherein the electro-mechanical actuator assembly (1) further comprises a locking unit (9), preferably an electro-mechanical linear actuator or a locking clutch, more preferably a bi-stable brake, configured and controlled to lock the driving device shaft (10) against a rotational movement.

6. Electro-mechanical actuator assembly (1) according to any one of the preceding claims, wherein the driving device shaft (10) and the spindle (3) extend substantially in one plane, and wherein the electro-mechanical actuator assembly (1) further comprises at least one control device (30a, 30b), preferably at least one electronic control device, arranged laterally to the plane and operatively connected to the driving device (2) and/or the locking unit (9) according to claim 5.

7. Electro-mechanical actuator assembly (1) according to claim 6, wherein the electro-mechanical actuator assembly (1) comprises at least two control devices (30a, 30b) arranged on opposite sides of the plane, wherein at least one of the at least two control devices (30a, 30b) is preferably a control unit configured to control operatively connected components, and the other at least one of the at least two control devices (30a, 30b) is preferably a power control unit configured to control a power supply to operatively connected components.

8. Electro-mechanical actuator assembly (1) according to any one of the preceding claims, wherein the spindle nut (6) is rotationally supported about the first longitudinal axis by at least one bearing (8a, 8b) arranged at a radial outer surface of the spindle nut (6).

9. Electro-mechanical actuator assembly (1) according to any one of the preceding claims, wherein, in the direction of the first longitudinal axis (L1), an end portion of the spindle (3) comprises a spindle recess (3a), preferably in a conical shape tapered from the opening of the spindle recess (3a) to the closed end of the spindle recess (3a), configured to at least partially receive the pushing member (4, 4', 4"), wherein the pushing member (4, 4', 4") is preferably operatively connected to the spindle (3) within the spindle recess (3a).

10. Electro-mechanical actuator assembly (1) according to claim 9, wherein the spindle (3) is supported by the spindle nut (6) and/or at least one bearing member over a predetermined support section in the direction of the first longitudinal axis (L1), preferably a predetermined support section at least partially corresponding to a predetermined actuation movement of the spindle (3) for actuating a brake actuator (20), and wherein the spindle recess (3a) extends in the direction of the first longitudinal axis (L1) such that a bending force transmission from the pushing member (4, 4', 4") to the spindle substantially occurs within the predetermined support section.

11. Electro-mechanical actuator assembly (1) according to any one of the preceding claims, wherein the pushing member (4, 4', 4") comprises a pushing member pivot portion (4c', 4c") configured to allow a tilting movement of the pushing member (4, 4', 4") about a pivot axis (17) inclined to the first longitudinal axis (L1), wherein the pushing member (4, 4', 4") comprises a pushing member body (4b', 4b") with one end comprising the pushing member pivot portion (4c', 4c‴) and an opposed end comprising a pushing member head (4a', 4a"), preferably an exchangeable and/or at least partially spherical pushing member head (4a', 4a"), configured to engage with a brake actuator (20) for a respective actuation of the brake actuator (20).

12. Electro-mechanical actuator assembly (1) according to claim 11, wherein the pushing member pivot portion (4c, 4c') comprises at least one pushing member pivot (41c, 41c') configured as a cylinder portion (41c) and/or a spherical portion (41c').

13. Brake assembly (100), comprising:
at least one electro-mechanical actuator assembly (1) according to any one of the preceding claims, and
at least one brake actuator (20) configured to actuate or release a brake upon being actuated by the electro-mechanical actuator assembly (1).

14. Brake assembly (100) according to claim 13, wherein the brake assembly (100) further comprises a brake caliper (60) actuatable by the at least one brake actuator (20), wherein the at least one brake caliper provides a braking plane extending in a direction substantially perpendicular to a braking movement, and wherein the at least one electro-mechanical actuator assembly (1) is arranged with the first longitudinal axis (L1) substantially perpendicular to the braking plane, preferably in a symmetry plane of the brake caliper (60), with the at least one brake actuator (20) disposed between the at least one electro-mechanical actuator assembly (1) and the brake caliper (60) or inside the brake caliper (60).

15. Vehicle comprising at least one electro-mechanical actuator assembly (1) according to any one of the claims 1 to 12 and/or a brake assembly according to claim 13 or 14, wherein the vehicle is a commercial vehicle and/or an electrically powered or hybrid.

## Patentansprüche

1. Elektromechanische Betätigungsvorrichtungsanordnung (1) zum Betätigen einer Bremsbetätigungsvorrichtung (20), umfassend:
einen Betätigungsmechanismus (3, 6), der konfiguriert ist, um eine drehende Antriebsbewegung in eine translatorische angetriebene Bewegung in Richtung einer ersten Längsachse (L1) umzuwandeln, und
ein Schubelement (4, 4', 4"), das mit dem Betätigungsmechanismus (3, 6) wirkgekoppelt ist, um die translatorische angetriebene Bewegung mindestens in der Richtung der ersten Längsachse (L1) aufzunehmen und zu übertragen,
wobei der Betätigungsmechanismus (3, 6) ein Spindel-Spindelmutter-Mechanismus ist, wobei eine Spindelmutter (6) des Betätigungsmechanismus (3, 6) drehbar um die erste Längsachse (L1) gelagert und dabei axial fixiert ist, und wobei eine Spindel (3) des Betätigungsmechanismus (3, 6) konfiguriert ist, um in Bezug auf die erste Längsachse (L1) axial beweglich und dabei drehfest zu sein, wobei
die Spindelmutter (6) mit einer Antriebsvorrichtung (2) wirkverbunden ist, um von der Antriebsvorrichtung (2) direkt oder über mindestens eine zwischen der Antriebsvorrichtung (2) und der Spindelmutter (6) angeordnete Getriebestufe (13, 14) angetrieben zu werden, **dadurch gekennzeichnet, dass**
die Antriebsvorrichtung (2) eine Antriebsvorrichtungswelle (10) umfasst, die sich in einer Richtung einer zweiten Längsachse (L2) parallel zur ersten Längsachse (L1) erstreckt.

2. Elektromechanische Betätigungsvorrichtungsanordnung (1) nach Anspruch 1, wobei der Spindel-Spindelmutter-Mechanismus (3, 6) eine Kugelumlaufspindel ist.

3. Elektromechanische Betätigungsvorrichtungsanordnung (1) nach Anspruch 1 oder 2, wobei die Antriebsvorrichtung (2) ein Elektromotor ist.

4. Elektromechanische Betätigungsvorrichtungsanordnung (1) nach einem der vorstehenden Ansprüche, wobei die Antriebsvorrichtungswelle (10) die Spindel (3) in der Richtung der zweiten Längsachse (L2) mindestens teilweise überlappt.

5. Elektromechanische Betätigungsvorrichtungsanordnung (1) nach einem der vorstehenden Ansprüche, wobei die elektromechanische Betätigungsvorrichtungsanordnung (1) weiter eine Verriegelungseinheit (9), vorzugsweise eine elektromechanische Linearbetätigungsvorrichtung oder eine Verriegelungskupplung, bevorzugter eine bistabile Bremse, umfasst, die konfiguriert und gesteuert ist, die Antriebsvorrichtungswelle (10) gegen eine Drehbewegung zu verriegeln.

6. Elektromechanische Betätigungsvorrichtungsanordnung (1) nach einem der vorstehenden Ansprüche, wobei sich die Antriebsvorrichtungswelle (10) und die Spindel (3) im Wesentlichen in einer Ebene erstrecken, und wobei die elektromechanische Betätigungsvorrichtungsanordnung (1) weiter mindestens eine Steuervorrichtung (30a, 30b), vorzugsweise mindestens eine elektronische Steuervorrichtung, umfasst, die seitlich zur Ebene angeordnet und mit der Antriebsvorrichtung (2) und/oder der Verriegelungseinheit (9) nach Anspruch 5 wirkverbunden ist.

7. Elektromechanische Betätigungsvorrichtungsanordnung (1) nach Anspruch 6, wobei die elektromechanische Betätigungsvorrichtungsanordnung (1) mindestens zwei Steuervorrichtungen (30a, 30b) umfasst, die auf gegenüberliegenden Seiten der Ebene angeordnet sind, wobei mindestens eine der mindestens zwei Steuervorrichtungen (30a, 30b) vorzugsweise eine Steuereinheit ist, die konfiguriert ist, um wirkverbundene Komponenten zu steuern, und die andere mindestens eine der mindestens zwei Steuervorrichtungen (30a, 30b) vorzugsweise eine Leistungssteuereinheit ist, die konfiguriert ist, um eine Leistungsversorgung für wirkverbundene Komponenten zu steuern.

8. Elektromechanische Betätigungsvorrichtungsanordnung (1) nach einem der vorstehenden Ansprüche, wobei die Spindelmutter (6) durch mindestens ein an einer radialen Außenoberfläche der Spindelmutter (6) angeordnetes Lager (8a, 8b) drehbar um die erste Längsachse gelagert ist.

9. Elektromechanische Betätigungsvorrichtungsanordnung (1) nach einem der vorstehenden Ansprüche, wobei in der Richtung der ersten Längsachse (L1) ein Endabschnitt der Spindel (3) eine Spindelaussparung (3a), vorzugsweise in einer konischen Form, die sich von der Öffnung der Spindelaussparung (3a) zum geschlossenen Ende der Spindelaussparung (3a) verjüngt, umfasst, und konfiguriert ist, um das Schubelement (4, 4', 4") mindestens teilweise aufzunehmen, wobei das Schubelement (4, 4', 4") vorzugsweise innerhalb der Spindelaussparung (3a) mit der Spindel (3) wirkverbunden ist.

10. Elektromechanische Betätigungsvorrichtungsanordnung (1) nach Anspruch 9, wobei die Spindel (3) durch die Spindelmutter (6) und/oder mindestens ein Lagerelement über einen vorbestimmten Lagerungsabschnitt in der Richtung der ersten Längsachse (L1), vorzugsweise einen vorbestimmten Lagerungsabschnitt, der mindestens teilweise einer vorbestimmten Betätigungsbewegung der Spindel (3) zum Betätigen einer Bremsbetätigungsvorrichtung (20) entspricht, gelagert ist, und wobei sich die Spindelaussparung (3a) in der Richtung der ersten Längsachse (L1) erstreckt, sodass eine Biegekraftübertragung vom Schubelement (4, 4', 4") auf die Spindel im Wesentlichen innerhalb des vorbestimmten Lagerungsabschnitts erfolgt.

11. Elektromechanische Betätigungsvorrichtungsanordnung (1) nach einem der vorstehenden Ansprüche, wobei das Schubelement (4, 4', 4") einen Schubelement-Schwenkabschnitt (4c', 4c") umfasst, der konfiguriert ist, um eine Kippbewegung des Schubelements (4, 4', 4") um eine Schwenkachse (17) zu ermöglichen, die zur ersten Längsachse (L1) geneigt ist, wobei das Schubelement (4, 4', 4") einen Schubelementkörper (4b', 4b") mit einem Ende umfasst, das den Schubelement-Schwenkabschnitt (4c', 4c‴) umfasst, und einem gegenüberliegenden Ende, das einen Schubelementkopf (4a', 4a"), vorzugsweise einen austauschbaren und/oder einen mindestens teilweise kugelförmigen Schubelementkopf (4a', 4a") umfasst, der konfiguriert ist, um mit einer Bremsbetätigungsvorrichtung (20) für ein jeweiliges Betätigen der Bremsbetätigungsvorrichtung (20) in Eingriff zu gelangen.

12. Elektromechanische Betätigungsvorrichtungsanordnung (1) nach Anspruch 11, wobei der Schubelement-Schwenkabschnitt (4c, 4c') mindestens einen Schubelement-Schwenkzapfen (41c, 41c') umfasst, der als Zylinderabschnitt (41c) und/oder sphärischer Abschnitt (41c') konfiguriert ist.

13. Bremsanordnung (100), umfassend:
mindestens eine elektromechanische Betätigungsvorrichtungsanordnung (1) nach einem der vorstehenden Ansprüche und
mindestens eine Bremsbetätigungsvorrichtung (20), die konfiguriert ist, um eine Bremse zu betätigen oder zu lösen, wenn sie durch die elektromechanische Betätigungsvorrichtungsanordnung (1) betätigt wird.

14. Bremsanordnung (100) nach Anspruch 13, wobei die Bremsanordnung (100) weiter einen Bremssattel (60) umfasst, der durch die mindestens eine Bremsbetätigungsvorrichtung (20) betätigbar ist, wobei der mindestens eine Bremssattel eine Bremsebene bereitstellt, die sich in einer Richtung im Wesentlichen senkrecht zu einer Bremsbewegung erstreckt, und wobei die mindestens eine elektromechanische Betätigungsvorrichtungsanordnung (1) mit der ersten Längsachse (L1) im Wesentlichen senkrecht zur Bremsebene, vorzugsweise in einer Symmetrieebene des Bremssattels (60) angeordnet ist, während die mindestens eine Bremsbetätigungsvorrichtung (20) zwischen der mindestens einen elektromechanischen Betätigungsvorrichtungsanordnung (1) und dem Bremssattel (60) oder innerhalb des Bremssattels (60) angeordnet ist.

15. Fahrzeug, das mindestens eine elektromechanische Betätigungsvorrichtungsanordnung (1) nach einem der Ansprüche 1 bis 12 und/oder eine Bremsanordnung nach Anspruch 13 oder 14 umfasst, wobei das Fahrzeug ein Nutzfahrzeug und/oder ein elektrisch betriebenes oder Hybridfahrzeug ist.

## Revendications

1. Ensemble actionneur électromécanique (1) pour actionner un actionneur de frein (20), comprenant :
un mécanisme d'actionnement (3, 6) configuré pour convertir un mouvement d'entraînement en rotation en un mouvement entraîné en translation dans une direction d'un premier axe longitudinal (L1), et
un élément de poussée (4, 4', 4") couplé de manière fonctionnelle au mécanisme d'actionnement (3, 6) pour recevoir et transférer le mouvement entraîné en translation au moins dans la direction du premier axe longitudinal (L1),
dans lequel le mécanisme d'actionnement (3, 6) est un mécanisme écrou de broche-broche, dans lequel un écrou de broche (6) du mécanisme d'actionnement (3, 6) est supporté en rotation autour du premier axe longitudinal (L1) tout en étant axialement fixe, et dans lequel une broche (3) du mécanisme d'actionnement (3, 6) est configurée pour pouvoir se déplacer axialement par rapport au premier axe longitudinal (L1) tout en étant fixe en rotation, dans lequel
l'écrou de broche (6) est connecté de manière fonctionnelle à un dispositif d'entraînement (2) pour être entraîné par le dispositif d'entraînement (2) directement ou via au moins un étage d'engrenage (13, 14) agencé entre le dispositif d'entraînement (2) et l'écrou de broche (6), **caractérisé en ce que**
le dispositif d'entraînement (2) comprend un arbre de dispositif d'entraînement (10) s'étendant dans une direction d'un second axe longitudinal (L2) parallèle au premier axe longitudinal (L1).

2. Ensemble actionneur électromécanique (1) selon la revendication 1, dans lequel le mécanisme écrou de broche-broche (3, 6) est une vis à billes.

3. Ensemble actionneur électromécanique (1) selon la revendication 1 ou 2, dans lequel le dispositif d'entraînement (2) est un moteur électrique.

4. Ensemble actionneur électromécanique (1) selon l'une quelconque des revendications précédentes, dans lequel l'arbre de dispositif d'entraînement (10) chevauche au moins partiellement la broche (3) dans la direction du second axe longitudinal (L2).

5. Ensemble actionneur électromécanique (1) selon l'une quelconque des revendications précédentes, dans lequel l'ensemble actionneur électromécanique (1) comprend en outre une unité de verrouillage (9), de préférence un actionneur linéaire électromécanique ou un embrayage de verrouillage, plus préférentiellement un frein bistable, configuré et commandé pour verrouiller l'arbre de dispositif d'entraînement (10) à l'encontre d'un mouvement de rotation.

6. Ensemble actionneur électromécanique (1) selon l'une quelconque des revendications précédentes, dans lequel l'arbre de dispositif d'entraînement (10) et la broche (3) s'étendent sensiblement dans un plan et dans lequel l'ensemble actionneur électromécanique (1) comprend en outre au moins un dispositif de commande (30a, 30b), de préférence au moins un dispositif de commande électronique, agencé latéralement par rapport au plan et relié de manière fonctionnelle au dispositif d'entraînement (2) et/ou à l'unité de verrouillage (9) selon la revendication 5.

7. Ensemble actionneur électromécanique (1) selon la revendication 6, dans lequel l'ensemble actionneur électromécanique (1) comprend au moins deux dispositifs de commande (30a, 30b) agencés sur des côtés opposés du plan, dans lequel au moins un des au moins deux dispositifs de commande (30a, 30b) est, de préférence, une unité de commande configurée pour commander des composants raccordés de manière fonctionnelle, et l'autre au moins un des au moins deux dispositifs de commande (30a, 30b) est, de préférence, une unité de commande d'alimentation configurée pour commander une alimentation électrique vers des composants raccordés de manière fonctionnelle.

8. Ensemble actionneur électromécanique (1) selon l'une quelconque des revendications précédentes, dans lequel l'écrou de broche (6) est supporté en rotation autour du premier axe longitudinal par au moins un palier (8a, 8b) agencé au niveau d'une surface externe radiale de l'écrou de broche (6).

9. Ensemble actionneur électromécanique (1) selon l'une quelconque des revendications précédentes, dans lequel, dans la direction du premier axe longitudinal (L1), une partie d'extrémité de la broche (3) comprend un évidement de broche (3a), de préférence de forme conique effilée depuis l'ouverture de l'évidement de broche (3a) jusqu'à l'extrémité fermée de l'évidement de broche (3a), configuré pour recevoir au moins partiellement l'élément de poussée (4, 4', 4"), dans lequel l'élément de poussée (4, 4', 4") est, de préférence, relié de manière fonctionnelle à la broche (3) à l'intérieur de l'évidement de broche (3a).

10. Ensemble actionneur électromécanique (1) selon la revendication 9, dans lequel la broche (3) est supportée par l'écrou de broche (6) e/ou au moins un élément de palier sur une section de support prédéterminée dans la direction du premier axe longitudinal (L1), de préférence, une section de support prédéterminée correspondant au moins partiellement à un mouvement d'actionnement prédéterminé de la broche (3) pour actionner un actionneur de frein (20) et dans lequel l'évidement de broche (3a) s'étend dans la direction du premier axe longitudinal (L1) de telle sorte qu'une transmission de force de flexion de l'élément de poussée (4, 4', 4") à la broche survienne sensiblement dans la section de support prédéterminée.

11. Ensemble actionneur électromécanique (1) selon l'une quelconque des revendications précédentes, dans lequel l'élément de poussée (4, 4', 4") comprend une partie de pivot d'élément de poussée (4c', 4c") configurée pour permettre un mouvement d'inclinaison de l'élément de poussée (4, 4', 4") autour d'un axe de pivotement (17) incliné par rapport au premier axe longitudinal (L1), dans lequel l'élément de poussée (4, 4', 4") comprend un corps d'élément de poussée (4b', 4b") avec une extrémité comprenant la partie de pivot d'élément de poussée (4c', 4c‴) et une extrémité opposée comprenant une tête d'élément de poussée (4a', 4a"), de préférence une tête d'élément de poussée interchangeable et/ou au moins partiellement sphérique (4a', 4a"), configurée pour venir en prise avec un actionneur de frein (20) pour un actionnement respectif de l'actionneur de frein (20).

12. Ensemble actionneur électromécanique (1) selon la revendication 11, dans lequel la partie de pivot d'élément de poussée (4c, 4c') comprend au moins un pivot d'élément de poussée (41c, 41c') configuré sous la forme d'une partie cylindrique (41c) et/ou d'une partie sphérique (41c').

13. Ensemble frein (100), comprenant :
au moins un ensemble actionneur électromécanique (1) selon l'une quelconque des revendications précédentes, et
au moins un actionneur de frein (20) configuré pour actionner ou relâcher un frein lorsqu'il est actionné par l'ensemble actionneur électromécanique (1).

14. Ensemble frein (100) selon la revendication 13, dans lequel l'ensemble frein (100) comprend en outre un étrier de frein (60) pouvant être actionné par le au moins un actionneur de frein (20), dans lequel le au moins un étrier de frein fournit un plan de freinage s'étendant dans une direction sensiblement perpendiculaire à un mouvement de freinage et dans lequel le au moins un ensemble actionneur électromécaniques (1) est agencé avec le premier axe longitudinal (L1) sensiblement perpendiculaire au plan de freinage, de préférence dans un plan de symétrie de l'étrier de frein (60), avec le au moins un actionneur de frein (20) disposé entre le au moins un ensemble actionneur électromécanique (1) et l'étrier de frein (60), ou à l'intérieur de l'étrier de frein (60).

15. Véhicule comprenant au moins un ensemble actionneur électromécanique (1) selon l'une quelconque des revendications 1 à 12 et/ou un ensemble frein selon la revendication 13 ou 14, dans lequel le véhicule est un véhicule commercial et/ou un véhicule électrique ou hybride.
